(19) Europäisches Patentamt
European Patent Office
Office européen des brevets

(11) EP 1 513 979 B1

(12) **FASCICULE DE BREVET EUROPEEN**

(45) Date de publication et mention de la délivrance du brevet:
**07.12.2011 Bulletin 2011/49**

(21) Numéro de dépôt: **03760053.3**

(22) Date de dépôt: **17.06.2003**

(51) Int Cl.:
***D06M 15/643** (2006.01)* ***C08J 3/03** (2006.01)*
***C03C 25/40** (2006.01)*

(86) Numéro de dépôt international:
**PCT/FR2003/001835**

(87) Numéro de publication internationale:
**WO 2003/106758 (24.12.2003 Gazette 2003/52)**

# (54) EMULSION SILICONE AQUEUSE POUR LE REVETEMENT DE SUPPORTS FIBREUX TISSES OU NON

WÄSSRIGE SILIKONEMULSION ZUR BESCHICHTUNG VON GEWEBTEN ODER NICHTGEWEBTEN FASERIGEN SUBSTRATEN

AQUEOUS SILICONE EMULSION FOR COATING WOVEN OR NONWOVEN TEXTILE SUBSTRATES

(84) Etats contractants désignés:
**AT BE BG CH CY CZ DE DK EE ES FI FR GB GR HU IE IT LI LU MC NL PT RO SE SI SK TR**

(30) Priorité: **18.06.2002 FR 0207498**

(43) Date de publication de la demande:
**16.03.2005 Bulletin 2005/11**

(73) Titulaire: **Bluestar Silicones France**
**69486 Lyon (FR)**

(72) Inventeurs:
- **DUMONT, Laurent**
  **F-73290 La Motte Servolex (FR)**
- **FEDER, Michel**
  **F-69100 Villeurbanne (FR)**
- **LAFAYSSE, Francis**
  **F-69005 Lyon (FR)**
- **ROBELIN, Sylvie**
  **F-69007 Lyon (FR)**

(74) Mandataire: **Fleurance, Raphaël et al**
**Cabinet Plasseraud**
**52 rue de la Victoire**
**75440 Paris Cedex 09 (FR)**

(56) Documents cités:
**EP-A- 0 819 735** **EP-A- 1 078 823**
**FR-A- 2 738 830** **FR-A1- 2 753 708**
**US-A- 4 791 029** **US-A- 5 827 921**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 513 979 B1

Printed by Jouve, 75001 PARIS (FR)

## Description

La présente invention a trait à une émulsion aqueuse de polyorganosiloxane (POS), notamment pour le revêtement de supports tissés (textiles) ou non tissés, destinée à produire un élastomère après réticulation en couche mince, ainsi qu'à un procédé de revêtement correspondant et aux supports ainsi revêtus.

Les revêtements silicones jouent notamment le rôle de liants destinés à améliorer les propriétés mécaniques des supports fibreux, notamment la résistance à la déchirure, la résistance à l'effilochage, la souplesse voire l'aptitude au froissement.

Les revêtements silicones peuvent également contribuer à conférer aux supports fibreux une certaine imperméabilité et un caractère hydrofuge.

Dans le cas de supports fibreux (tissés ou non tissés) ignifuges tels que les tissus ou les non-tissés de verre, il importe que ces revêtements silicones ne grèvent pas la résistance à la combustion et plus spécialement le pouvoir calorifique de tels supports.

Outre la protection des matières textiles contre la chaleur et le feu, les revêtements silicone peuvent également leur procurer une protection contre d'autres agressions et/ou leur conférer des propriétés spécifiques pour certaines applications (propriétés diélectriques par exemple). Comme applications, on peut citer notamment les sacs gonflables utilisés pour la protection des occupants d'un véhicule, en anglais "air bag", tresses de verre (gaines en tissu de verre de protection thermique et diélectrique pour fil électrique), bandes transporteuses, tissus coupe-feu ou isolants thermiques, compensateurs (manchons flexibles d'étanchéité pour tuyauterie), vêtements ou bien encore des matériaux souples destinés à être utilisés dans l'architecture textile intérieure ou extérieure (bâches, tentes, stands, chapiteaux, faux plafonds...), ou encore la protection solaire.

Il existe plusieurs problèmes techniques importants en matière de réalisation de revêtements élastomères sur des supports fibreux.

Un premier problème est lié à l'opération de dépôt/imprégnation de la composition silicone non réticulée sur le support. Il importe qu'elle puisse se faire facilement, rapidement (cadence industrielle) et, pour des raisons économiques évidentes, avec des taux de dépôts réduits (par exemple inférieurs à 40 microns).

Un second problème réside dans le niveau d'adhérence minimum que doit avoir le revêtement silicone sur le support.

Un troisième problème découle de l'ambition d'améliorer les performances du revêtement élastomère silicone sur le plan de ses propriétés mécaniques, de sa fonction de protection, et de ses propriétés hydrofuges et imperméabilisantes, sans que cela ne nuise aux qualités ignifuges de certains supports textiles tels que les tissus de verre.

La prise en compte du premier problème susvisé a conduit les hommes du métier vers des compositions silicones liquides du type émulsions aqueuses de silicone avec ou sans charge. Il reste à savoir si ces émulsions permettent de satisfaire correctement aux deuxième et troisième problèmes sus-évoqués.

La demande de brevet européen EP-A-0 535 649 propose une composition pour le revêtement de sacs gonflables "airbag" comprenant :

- un polyorganosiloxane (A) du type POS e.g: PDMS $\alpha,\omega$-diméthylhydroxysiloxy, en émulsion dans l'eau en présence d'un émulsifiant anionique,
- un promoteur d'adhérence (B). qui est choisi dans le groupe comprenant : le produit de réaction entre, d'une part, un silane amino-fonctionnel ou un hydrolysat de celui-ci, et d'autre part, un anhydride d'acide, un silane époxy-fonctionnel ou un hydrolysat de celui-ci et/ou un organosilane ayant un radical isocyanate et un radical hydrolysable ou un hydrolysat de celui-ci, (cf. exemple 3-amino-propyltriéthoxysilane + anhydride maléique),
- une silice colloïdale (C),
- et un catalyseur (D).

Cette émulsion souffre des inconvénients suivants : compromis insuffisant en terme d'adhérence, de réactivité et de stabilité des émulsions, en particulier adhérence insuffisante du silicone sur le support, incompatibilité des silanes et du tensioactif utilisés avec les systèmes de polyaddition à base d'huiles à ≡SiH et de catalyseur au Platine.

De même, la demande de brevet européen EP-A-O 552 983 décrit une composition du même type, obtenue à partir (A) d'un organopolysiloxane ayant au moins deux groupes alcényle [poly(diméthyl)(vinylméthyl)siloxane alpha, oméga-diméthylvinylsiloxyl, (B) d'un organohydrogénopolysiloxane [poly-(méthylhydrogéno)siloxane alpha,oméga-triméthylsiloxy] ayant au moins trois atomes d'hydrogène et (C)un catalyseur de réticulation au platine, (D) un inhibiteur de réticulation du type éthynylcyclohexanol, (E) un promoteur d'adhérence du type trialcoxysilane époxydé ou silane aminofonctionnel (p.4, ligne 34), et (F) éventuellement une charge renforçante telle qu'une silice colloïdale par émulsification dans l'eau en présence d'un émulsifiant (dodécylbenzène-sulfonate et alcool polyvinylique APV).

Cette émulsion souffre des inconvénients suivants : compromis adhérence (sur le support) / stabilité (de l'émulsion) insuffisant, en particulier l'utilisation du dodécylbenzene sulfonate et de silane aminofonctionnel non salifié conduit

à une stabilité limitée des émulsions de polyaddition.

Le brevet européen EP-B-0 758 666 concerne des émulsions aqueuses comprenant :

1- des POS de type polydiméthylsiloxane (PDMS) vinylés en bout de chaîne (vinyldiméthylsiloxy) ;
2- des POS hydrogénés de type poly(méthylhydrogéno)(diméthyl)-siloxane $\alpha,\omega$-triméthylsiloxy ;
3- un catalyseur au platine du type platine de Karstedt ;
4- un promoteur d'adhérence produit par la réaction entre un vinyle triacétoxysilane et un triméthoxysilane fonctionnalisé par un radical glycidyle ;
5- un inhibiteur de réticulation du type éthynylcyclohexanol ;
6- une résine silicone de type MT avec M = ($Me_3SiO_{1|2}$) et T = ($MeSiO_{3/2}$);
7- un émulsifiant du type dodécylbenzène sulfonate de sodium.

Cette solution silicone polyaddition trouve une application privilégiée pour la réalisation de revêtements d'enduction textile ("airbag" : support en polyamide).

La demande de brevet européen EP-A-1 010 721 concerne la même émulsion que celle décrite dans l'EP-B-0 758 666, avec un additif supplémentaire constitué par du noir de carbone.

La demande de brevet FR-A-2 738 830 concerne une émulsion aqueuse de polyorganosiloxanes pour l'enduction de matière textile. Cette émulsion est obtenue par mélange d'une émulsion A et d'une émulsion B.

L'émulsion A comprend :

- 1- de l'huile POS de type PDMS $\alpha,\omega$-diméthylvinylsiloxy ;
- 2- d'une huile POS hydrogénée du type PDMS $\alpha,\omega$-diméthylhydrogénosiloxy ;
- 3- une huile à silicone POS hydrogénée du type poly(diméthyl)(méthylhydrogéno)siloxane ;
- 4- un promoteur d'adhérence du type vinyltriméthoxysilane, 3-glycidoxypropyltriméthoxysilane (GLYMO), 4-époxycyclohexyl-éthyltriméthoxysilane, chélates de type orthotitanate de butyle, ou enfin s'agissant des compositions silicones réticulables par polyaddition, des silanes aminés de type triméthoxy ou triéthoxysilane amino-fonctionnel) ;
- 5- un inhibiteur de réticulation du type éthynylcyclohexanol ;
- 6- et charges = silice colloïdale hydrophobée dans de l'huile silicone.

L'émulsion B comprend :

- 1'- de l'huile POS $\alpha,\omega$-divinylée identique à celle de l'émulsion A ;
- 4'- un promoteur d'adhésion du type titanate de butyle ;
- 7- un catalyseur au platine ;
- 6'- de la charge colloïdale du même type que dans l'émulsion A.

Les émulsions A et B sont préparées par mélange (sans mise en émulsion) des composants, d'une part, 1 à 6 et, d'autre part, 1', 4', 7 et 6', respectivement, puis par mise en émulsion subséquente, à savoir par agitation des compositions sus-décrites en présence d'eau et d'alcool polyvinylique (APV 25/140 Rhodoviol®). Une fois obtenues séparément, les émulsions A et B sont mélangées l'une à l'autre.

En outre, cette émulsion aqueuse silicone présente les inconvénients suivants : réalisation d'émulsions très grossières, procédé peu souple et onéreux car il faut réaliser des mélanges silicones intermédiaires, difficulté de préparer des émulsions très concentrées.

Dans cet état de la technique, l'un des objectifs essentiels de la présente invention est de fournir une émulsion silicone réticulable par polyaddition, pour le revêtement de supports fibreux tissés ou non et doté e de propriétés rhéologiques telles qu'elle puisse être aisément déposée/appliquée sur le support fibreux, à grande vitesse, et selon des taux de dépôt limités, par exemple inférieurs à 40 $g/m^2$.

Un autre objectif essentiel de l'invention est de fournir une émulsion silicone aqueuse réticulable par polyaddition, pour former des revêtements fins (couches minces) de protection de supports fibreux tissés (textiles) ou non tissés, la composition de cette émulsion étant telle que l'adhérence du film élastomère silicone réticulé sur le support soit optimale.

Un autre objectif essentiel de l'invention est de fournir une émulsion silicone aqueuse réticulable par polyaddition et destinée au revêtement de supports fibreux tissés ou non, la composition de cette émulsion étant telle qu'elle conduise à un revêtement silicone élastomère réticulé propre à conférer d'excellentes qualités mécaniques au support (cohésion, souplesse, résistance à l'effilochage, résistance à la déchirure, aptitude au froissement).

Un autre objectif essentiel de l'invention est de fournir une émulsion silicone aqueuse réticulable par polyaddition en revêtement élastomère pour support fibreux tissé ou non; la composition de cette émulsion étant telle qu'elle satisfasse aux spécifications de dépôt aisé et en quantité limitée , d'adhérence sur support de qualité mécanique.

Un autre objectif essentiel de l'invention est de fournir une émulsion silicone aqueuse réticulable par polyaddition pour former sur des supports fibreux minéraux peu adhérents, (en particulier supports en fibres de verre, textiles ou non) des revêtements silicones adhérant sur les fibres mais leur conférant des propriétés anti-adhérentes, hydrofuges, imperméables et répondant aux spécifications de dépôt aisé et en quantité limitée, d'adhérence sur supports, de propriétés mécaniques (souplesse/résistance à la déchirure et à l'effilochage) et d'incombustibilité correspondant à un Pouvoir Calorifique Supérieur (PCS) mesuré selon NFP 92510 inférieur à 4200 kJ/kg et de préférence inférieur à 2500 kJ/kg.

Un autre objectif essentiel de l'invention est de fournir une émulsion silicone aqueuse réticulable par polyaddition, sur des supports fibreux tissés ou non, en revêtements élastomères protecteurs, imperméables, souples, résistants et éventuellement ignifuges, la composition de cette émulsion étant telle que pour des supports en fibres de verre, le film élastomère soit un bon liant apte à donner de la tenue, de la cohésion et de la souplesse aux supports de verre enduit, tout en limitant au maximum le phénomène de marquage à la pliure.

Un autre objectif essentiel de l'invention est de réaliser des émulsions stables, chimiquement (conservation des ≡SiH et de la réactivité) et physiquement (crémage et coalescence limités lors du stockage de l'émulsion), et présentant de bonnes caractéristiques en terme de réactivité (réticulation par polyaddition) et d'adhérence sur le support, par séchage du tissu traité.

Ces objectifs, parmi d'autres, sont atteints par la présente invention qui concerne tout d'abord une émulsion aqueuse de polyorganosiloxane (POS) réticulable en élastomère par des réactions de polyaddition, pour l'imprégnation de supports fibreux tissés ou non, et comprenant:

A) au moins un POS présentant par molécule au moins deux groupements fonctionnels insaturés de type alcényle en $C_2$-$C_6$, liés au silicium,
(B) au moins un POS présentant par molécule au moins trois atomes d'hydrogène liés au silicium,
(C) au moins un promoteur d'adhérence spécial,
(D) au moins un catalyseur,
(E) au moins un tensioactif,
(F) éventuellement au moins une résine POS comportant au moins deux groupements alcényles,
(G) éventuellement au moins un inhibiteur de réticulation,
(H) éventuellement au moins un agent de fixation du pH,
(I) éventuellement au moins un additif de formulation,
(J) éventuellement une charge,
(K) et de l'eau,

caractérisée en ce que :

- le promoteur d'adhérence (C) est choisi dans le groupe de composés constitué par les silanes et/ou les POS, porteurs par molécule d'au moins un groupement hydroxyle et d'au moins une fonction aminée et salifiée, et leurs mélanges,
- le pourcentage en poids du promoteur d'adhérence (C) par rapport à la phase silicone est tel que :
  $0,005 \leq (C) \leq 10$
  de préférence $0,03 \leq (C) < 5$
  et plus préférentiellement encore $0,05 \leq (C) \leq 4,0$

Suivant une caractéristique particulière de l'invention, l'émulsion est exempte :

* de copolymère(s) polydiorganosiloxane vinylé sensiblement linéaire, de type statistique, bloqué à chacune des extrémités de sa chaîne polymère par des groupements vinyldiorganosiloxy ou triorganosiloxy et contenant au moins trois groupements SiVi par molécule,
* et/ou de cyclotrisiloxane(s) vinylé de formule $[R(CH_2=CH)SiO]_3$ dans laquelle R est un radical alkyle en C1-C4, un radical phényle ou un radical 3,3,3-trifluoropropyle, ce cyclotrisiloxane vinylé étant présent en quantité telle que 0,5 à 60 %, de préférence 1,5 à 20 % du nombre de groupements vinyles de l'émulsion seraient constitués par les vinyles de ce cyclotrisiloxane vinylé,
* et/ou de lauryl sulfate de sodium.

De préférence, le rapport *quantité pondérale de promoteur d'adhérence (C) / surface développée par le support,* se situe dans l'intervalle allant de 0,1 à 10 $mg/m^2$, de préférence de 0,2 à 5 $mg/m^2$.

Par "*surface développée par le support*", on entend conformément à l'invention la surface développée par les fibres constituant le tissu et qui seront recouvertes par l'émulsion.

L'émulsion silicone aqueuse selon l'invention est du type de celle réticulable par polyaddition à température ambiante (EVF ou RTV), sachant que cette réticulation catalysée par le platine peut être activée thermiquement (100-200°C).

Cette émulsion aqueuse silicone selon l'invention est adhérente sur de nombreux supports fibreux, tissés ou non, par exemple en fibres de verre, éventuellement en fibres textiles synthétiques, du type polyester ou polyamide.

S'agissant des supports fibreux du type tissu de verre, l'émulsion selon l'invention permet d'obtenir des tissus de verre enduits d'élastomères silicones en couches minces, hydrofuges ayant de bonnes propriétés mécaniques de souplesse, de résistance à la déchirure et à l'effilochage et dégageant peu de chaleur en cas de combustion PCS $\leq$ 4500 kJ/kg, de préférence PCS $\leq$ 2500 kJ/kg.

L'un des constituants essentiels de l'émulsion selon l'invention est le promoteur d'adhérence (C) spécial, judicieusement sélectionné pour que l'adhérence soit apportée :

- par des silanes et/ou des POS spécifiques, judicieusement sélectionnés, à savoir les silanes et/ou les POS hydroxylés et amino-salifiés,
- ou bien encore par un hydrocolloïde protecteur, de préférence de l'APV, et par des silanes et/ou des POS hydroxylés et amino-salifiés.

Conformément à un mode de réalisation de l'invention, le tensioactif (E) peut être au moins en partie constitué par au moins un hydrocolloïde protecteur, de préférence un APV.

Dans un mode de réalisation de l'invention, l'hydrocolloïde protecteur, de préférence l'APV, promoteur d'adhérence et émulsifiant, est présent à raison de 1,5 à 7 % d'APV sec par rapport à la masse totale d'huiles silicones.

Sur le plan qualitatif, on peut indiquer que l'hydrocolloïde protecteur est de préférence un alcool polyvinylique (APV) ou un mélange d'APV et, préférentiellement les grades d'APV qui, en solution aqueuse (à 4 % et à 20°C), ont une viscosité dynamique type ($\eta$dt) comprise entre 5 et 40 mPa.s, de préférence entre 10 et 30 mPa.s et un indice d'ester supérieur ou égal à 80, de préférence à 100 et notamment compris entre 120 et 200.

De préférence, l'APV est mis en oeuvre sous forme de solution aqueuse de viscosité dynamique type ($\eta$dt) comprise entre 5 et 40 mPa.s, de préférence entre 10 et 30 mPa.s, et dont l'indice d'ester est supérieur ou égal à 80, de préférence à 100 et notamment compris entre 120 et 200.

Les alcools polyvinyliques (APV) sont des composés obtenus indirectement à partir de leurs esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur sa solubilité. Un mode de définition des APV repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcalinité.

Les alcools polyvinyliques selon l'invention sont également caractérisés parleur degré de condensation que l'on peut évaluer par la détermination de la viscosité dynamique d'une solution type (désignée par $\eta$dt dans le présent exposé), sachant que cette variable est d'autant plus élevée que le degré de condensation est plus grand.

La viscosité $\eta$dt correspond au coefficient de viscosité dynamique d'une solution aqueuse d'APV à 4% poids, mesuré à une température de 20 $\pm$ 5°C à l'aide d'un viscosimètre d'Ostwald.

Comme autre hydrocolloïde protecteur, on peut également citer des polyesters sulfonés hydrodispersables, notamment de type polyéthylène téréphtalate sulfoné.

Les polyesters sulfonés hydrodispersables sont des produits connus et disponibles dans le commerce. Ils peuvent être préparés par co-condensation d'un diacide organique (tel qu'un diacide aliphatique saturé ou insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol, en présence d'un catalyseur habituel de polyestérification tel que l'orthotitanate de tétraisopropyle.

Comme monomères de départ couramment utilisés pour la préparation des polyesters sulfonés, hydrodispersables, on peut citer en tant que:

- diacides organiques : les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composés préférés sont l'acide adipique, les acides orthophtalique, isophtalique, téréphtalique ;
- diacides organiques sulfonés : les diacides sulfonates de sodium ou leurs diesters tels que les dialcoylisophtalates et dialcoylsulfosuccinates comme le diméthylisophtalate-5 sulfonate de sodium ou le diméthylsulfosuccinate de sodium ;

- diols : les glycols aliphatiques tels que l'éthylèneglycol, le diéthylèneglycol, le dipropylèneglycol et les homologues supérieurs, le butane-1,4 diol, l'hexane1,6 diol, le néopentylglycol et les glycols cyclaniques tels que le cyclohexanediol, le dicyclohexane -diolpropane. Les diols choisis préférentiellement sont l'éthylèneglycol et le diéthylèneglycol.

Les polyesters sulfonés hydrodispersables préférés sont ceux qui ont une masse moléculaire moyenne en nombre comprise entre 10.000 et 35.000, un indice d'acide inférieur à 5 mg de KOH/g, un taux de soufre compris entre 0, 8 et 2 % poids, de préférence entre 1, 2 et 1, 8 %. Comme polyesters de ce type, on peut utiliser notamment les produits commercialisés par RHODIA sous la marque GEROL PS20.

Les silanes hydroxylés et aminosalifiés qui peuvent être des éléments constitutifs du promoteur (C) sont obtenus à partir de précurseurs non salifiés, parmi lesquels on peut citer comme exemples les monoamine-trihydroxy-monosilanes, tels que le : $NH_2\ (CH_2)_3\text{-}Si(OH)_3$ , éventuellement oligomérisé par condensation partielle des SiOH.

Ceci étant précisé, le promoteur d'adhérence hydrosoluble (C) comprend, de préférence, des POS hydroxylés, aminés et salifiés.

Ces POS aminés et salifiés constituant le promoteur (C) sont avantageusement formés de plusieurs unités récurrentes de formule moyenne (I) suivante:

$$(R^1)_x(R^2)_y\,(OH)_z\ Si\ O_{\frac{4-(x+y+z)}{2}}$$

**(I)**

dans laquelle :

■ $R^1$ représente un groupement monovalent exempt d'azote, de nature identique ou différente d'une unité récurrente à l'autre, et correspondant à un alkyle en $C_1$-$C_6$, un aryle, un alcényle en $C_2$-$C_8$, ou un acrylate, chacun de ces groupements étant éventuellement substitué,

■ $R^2$ étant de nature identique ou différente d'une unité récurrente à l'autre et répondant à la formule suivante :

$$- R^4 - N^{(+)}\ R^5R^6,\ X^{(-)}$$

* $R^4$ étant un radical hydrocarboné en $C_1$-$C_{10}$, éventuellement substitué,

* les groupements $R^5$, $R^6$ sont identiques ou différents et représentent l'hydrogène ou un radical hydrocarboné en $C_1$-$C_{10}$, éventuellement substitué, ou $-R^4\text{-}NH_3^{(+)}$, $X^{(-)}$,

* ou bien encore les groupements $R^5$ et $R^6$ sont différents de l'hydrogène et forment ensemble un cycle à 5-7 chaînons renfermant au moins un hétéroatome, de préférence l'azote ou l'oxygène,

* et X représentant un contre-anion choisi parmi les carboxylates, les halogénures et ;

■ x, y et z sont des nombres entiers ou décimaux positifs inférieurs à 4 ;

■ et $x + y + z < 4$.

De préférence, le POS aminé et salifié est une résine présentant une fonctionnalité moyenne en silicium supérieure à 2, correspondant à $x + y < 2$:

- x étant de préférence < 2 et plus préférentiellement encore $0,1 \leq x \leq 1$ ;
- y étant de préférence < 1,2 et plus préférentiellement encore $0,1 \leq y \leq 1,1$.

Cela correspond à une résine POS :

- d'une part, hydroxylée et comprenant des motifs siloxyles T et éventuellement M et/ou D et/ou Q ou bien encore des motifs siloxyles Q et M et/ou D et/ou T;
- d'autre part, portant au moins un motif aminé et salifié.

Les motifs siloxyles M, D, T, Q du POS (C) sont définis comme suit :

- motif M = $R_3\ SiO_{1/2}$

- motif D = $R_2$ Si02/2
- motif T = $RSiO_{3/2}$
- motif Q = $SiO_{4/2}$

Les radicaux R sont identiques ou différents et correspondent :

o à un radical $R^1$ tel que défini ci-dessus (comme par exemple un radical alkyle (e.g. méthyle, éthyle, isopropyle, tertiobutyle et n-hexyle), un hydroxyle, alcényle (e.g. vinyle, allyle)
o ou bien encore un motif $R^2$ aminosalifiable ou salifié, tel que défini ci-dessus.

A titre d'exemple de résine POS hydroxylée linéaire, utilisable comme promoteur (C), on peut citer le PolyMéthylSiloxane, dont les deux extrémités comportent un hydroxyle et dont chaque atome de silicium est porteur d'un motif aminosalifiable ou salifié.
Les résines plus particulièrement sélectionnées sont celles du type T(OH), DT(OH), DQ(OH), DT(OH), MQ (OH), MDT(OH) MDQ(OH) ou les mélanges de celles-ci. Dans ces résines, chaque groupement OH est porté par un atome de silicium appartenant à un motif D, T ou Q.
Ces résines sont des produits de condensation (mono ou polycondensation-hétéro ou homo condensation) de monomères, d'oligomères ou de polymères POS porteurs de groupements condensables, de préférence de nature hydroxylique.
Outre ces hydroxyles, le promoteur (C) comporte un ou plusieurs motifs aminosalifiables ou salifiés identiques ou différents entre eux.
Dans ces motifs, l'amine peut être primaire, secondaire ou tertiaire. Selon des variantes, elle peut être incluse dans un cycle ou être incluse dans des groupements isocyanurates ou HALS (type pipéridine ou autre).
Au sens de l'invention, les groupements HALS peuvent être définis comme une chaîne hydrocarbonée cyclique (HALS) de formule :

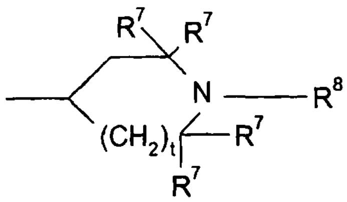

dans laquelle :

- les radicaux $R^7$, identiques ou différents entre eux, sont choisis parmi les radicaux alkyles, linéaires ou ramifiés, ayant de 1 à 3 atomes de carbone, phényle et benzyle ;
- $R^8$ est choisi parmi un atome d'hydrogène, les radicaux alkyles linéaires ou ramifiés, ayant de 1 à 12 atomes de carbone, les radicaux allkylcarbonyles, où le reste alkyle est un reste linéaire ou ramifié ayant de 1 à 18 atomes de carbone, les radicaux phényle et benzyle et un radical O ;
- t est un nombre choisi parmi 0 et 1 ;
- de préférence les radicaux $R^7$ sont des méthyles, le radical $R^8$ est un atome d'hydrogène ou un radical méthyle et t étant avantageusement un nombre égal à 1.

Les motifs aminosalifiables ou salifiés sont avantageusement choisis de telle sorte qu'ils soient aptes à se lier avec le support sur lequel l'émulsion est appliquée, de manière à procurer de l'adhérence, et ce sans mettre à mal l'hydrosolubilité souhaitable pour le promoteur (C).
Pour plus de détails sur ces promoteurs (C) de type résine silicone hydrosoluble, aminosalifiable ou salifiée et hydroxylée, et sur leur obtention, on se réfèrera au brevet FR-B- 2 753 708 ou à la demande de brevet européen EP-A- 0 675 128, dont les contenus sont intégrés par référence dans le présent exposé.
A titre d'exemples précis de motifs aminosalifiables, on peut citer notamment :

- aminopropyle : $(H_2N)(CH_2)$-3
- N-méthyl-3-aminopropyle : $(H_3CNH)(CH_2)$-3
- N-aminoéthyl-3-aminopropyle : $(H_2N)(CH_2)_2NH(CH_2)$-3
- $C_6H_5CH_2NH(CH_2)_2$ $(NH)(CH_2)$-3
- 3-uréidopropyle : $(H_2N$ CO $NH)(CH_2)$-3

- 3-4,5-dihydroimidazole-1-yl-propyle :

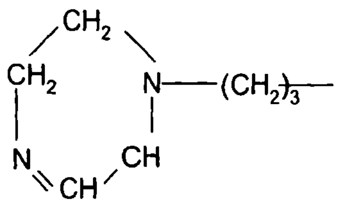

de manière optionnelle, le promoteur comportant des motifs aminosalifiables peut aussi porter des fonctions non aminées, telles que les suivantes :

- 3-méthacryloxypropyl : $(H_2C = C)(CH_3)\ (COO)(CH_2)_3$-
- 3-glycidyloxypropyl:

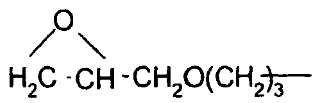

- 3-mercaptopropyl : $(HS)(CH_2)$-$_3$
- 3-chloropropyle : $(Cl)(CH_2)$-$_3$
- Vinyle : $CH_2$=CH-

ces motifs pouvant être incorporés par des techniques connues par l'homme de métier, notamment par co-hydrolyse/co-condensation d'un alcoxysilane aminé avec un alcoxysilane non aminé portant les motifs décrits ci -dessus.

On peut aussi ajouter les alcoxysilanes portant ces motifs non aminés dans l'émulsion contenant le silane aminé salifié.

L'une des caractéristiques essentielles du promoteur (C) sélectionné conformément à l'invention, est d'être salifié au travers des motifs aminés qui sont tels que décrits ci-dessus et qui comprennent au moins un $\equiv N^+$, $X^-$, avec X représentant un contreanion choisi parmi les carboxylates, les halogénures, de préférence un lactate, un acétate ou un chlorure.

Pour que le promoteur (C) soit salifié, il convient de faire en sorte que la phase continue aqueuse de la dispersion ait un pH tel que ce promoteur (C) (de préférence une résine POS hydroxylée) se maintienne sous forme ionisée. Le choix du pH s'effectue, de manière connue en soi, selon le pKa de l'acide qui correspond au contre-anion mis en oeuvre.

Le promoteur (C) préféré sous forme de résine hydroxylée est inclus dans la phase continue aqueuse de la dispersion. Il y est solubilisé ou finement dispersé.

Selon une variante, il est envisageable qu'une partie seulement du promoteur (C) soit sous forme salifié, le reste étant non salifié.

Les mélanges de promoteurs (C) de différentes natures sont également couverts par l'invention.

La phase silicone de l'émulsion selon l'invention comprend des POS destinés à générer l'élastomère par réticulation/durcissement à température ambiante (23°C) selon un mécanisme de polyaddition. Il est possible d'accélérer la réticulation par activation thermique à une température supérieure à l'ambiante. Les élastomères dit vulcanisables à froid de polyaddition et les élastomères vulcanisables à chaud de polyaddition entrent dans le cadre de l'invention.

Au sens de l'invention, le terme "phase silicone" doit s'entendre comme "phase non aqueuse" dans l'émulsion.

Ces polyorganosiloxanes, constituants principaux des compositions selon l'invention, peuvent être linéaires, ramifiés ou réticulés, et comporter des radicaux hydrocarbonés et/ou des groupements réactifs comme par exemple des groupes hydroxyles, des groupements hydrolysables, des groupements alcényles, des atomes d'hydrogène, etc. A noter que les compositions organopolysiloxanes sont amplement décrites dans la littérature et notamment dans l'ouvrage de Walter NOLL "Chemistry and Technology of Silicones", Academic Press, 1968, 2ème édition, pages 386 à 409.

Plus précisément les POS, constituants principaux des compositions selon l'invention, sont constitués de motifs siloxyles de formule générale :

$$R^9{}_n SiO_{\frac{4-n}{2}} \qquad (II)$$

et/ou de motifs siloxyles de formule :

$$Z_nR^9_ySiO_{\frac{4-x-y}{2}} \qquad (III)$$

Dans ces formules, les divers symboles ont la signification suivante :

- les symboles $R^9$, identiques ou différents, représentent chacun un groupement de nature hydrocarbonée, non hydrolysable, ce radical pouvant être :

  * un radical alkyle, halogènoalkyle ayant de 1 à 5 atomes de carbone et comportant de 1 à 6 atomes de chlore et/ou de fluor,
  * des radicaux cycloalkyles et halogènocycloalkyles ayant de 3 à 8 atomes de carbone et contenant de 1 à 4 atomes de chlore et/ou de fluor,
  * des radicaux aryles, alkylaryles et halogènoaryles ayant de 6 à 8 atomes de carbone et contenant de 1 à 4 atomes de chlore et/ou de fluor,
  * des radicaux cyanoalkyles ayant de 3 à 4 atomes de carbone ;

- les symboles Z, identiques ou différents, représentent chacun un atome d'hydrogène, un groupement alcényle ;

  - n = un nombre entier égal à 0, 1, 2 ou 3 ;
  - - x = un nombre entier égal à 0, 1, 2 ou 3 ;
  - - y = un nombre entier égal à 0, 1 ou 2 ;

- la somme x + y est comprise entre 1 et 3.

A titre illustratif, on peut citer en tant que radicaux organiques $R^9$, directement liés aux atomes de silicium : les groupes méthyle ; éthyle ; propyle ; isopropyle ; butyle ; isobutyle ; n-pentyle ; t-butyle chlorométhyle ; dichlorométhyle ; α-chloroéthyle, α,β-dichloroéthyle , fluorométhyle ; difluorométhyle α,β-difluoroéthyle ; trifluoro-3,3,3 propyle trifluoro cyclopropyle ; trifluoro-4,4,4 butyle ; hexafluoro-3,3,4,4,5,5 pentyle ; β-cyanoéthyle ; β-cyanopropyle ; phényle ; p-chlorophényle- ; m-chlorophényle ; dichloro-3,5 phényle; trichlorophényletétrachlorophényle o-, p-, ou m-tolyle ; α-α-α-trifluorotolyle ; xylyles comme diméthyl-2,3 phényle,diméthyl-3,4 phényle.

Préférentiellement, les radicaux organiques $R^9$ liés aux atomes de silicium sont des radicaux méthyle, phényle, ces radicaux pouvant être éventuellement halogénés ou bien encore des radicaux cyanoalk yle.

Les symboles Z peuvent être des atomes d'hydrogène ou des groupements vinyles.

Il est possible d'utiliser une grande variété de compositions organopolysiloxanes bicomposantes ou monocomposantes réticulant à température ambiante ou à la chaleur par des réactions de polyaddition, essentiellement par réaction de groupements hydrogénosilylés sur des groupements alcénylsilylés, en présence généralement d'un catalyseur métallique, de préférence au platine, ces compositions étant décrites par exemple dans les brevets US-A-3 220 972, 3 284 406, 3 436 366, 3 697 473 et 4 340 709. Les organopolysiloxanes entrant dans ces compositions sont en général constitués par des couples à base d'une part d'au moins un polysiloxane linéaire, ramifié ou réticulé constitué de motifs (III) dans lesquels le reste Z représente un groupement alcényle et où x est au moins égal à 1, éventuellement associés à des motifs (II), et d'autre part d'au moins un hydrogéno-polysiloxane linéaire, ramifié ou réticulé constitué de motifs (III) dans lesquels le reste Z représente alors un atome d'hydrogène et où x est au moins égal à 1, éventuellement associés à des motifs (II).

En ce qui concerne le constituant polysiloxane insaturé à motifs (III), il peut s'agir d'une huile de viscosité dynamique à 25°C comprise entre 200 et 500 000 mPa.s. On peut également utiliser au besoin à titre de constituant polysiloxane insaturé à motifs (III), un mélange à base de l'huile précitée et d'une gomme insaturée de viscosité supérieure à 500 000 mPa.s, pouvant aller jusqu'à $10^6$ mPa.s.

De manière préférée, les émulsions selon l'invention comportent en outre, lorsqu'il s'agit de compositions de polyaddition, au moins une résine silicone (F) non hydroxylée. Ces résines silicones sont des polymères POS ramifiés bien connus et disponibles dans le commerce. Elles présentent, par molécule, au moins deux motifs différents choisis parmi ceux de formule $R^{10}_3SiO_{1l2}$ (motif M), $R^{10}_2SiO_{2/2}$ (motif D), $R^{10}SiO_{3/2}$ (motif T) et $SiO_{4/2}$ (motif Q).

Les radicaux R sont identiques ou différents et sont choisis parmi les radicaux alkyles linéaires ou ramifiés, les radicaux vinyle, phényle, trifluoro-3,3,3 propyle. De préférence les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Avantageusement, dans les émulsions type polyaddition, au moins une partie des radicaux $R^{10}$ sont des restes vinyles (teneur pondérale en Vi notamment comprise entre 0,1 et 2 %). Ces fonctions vinylées sont portées par les motifs M, D ou T. Comme exemple, on peut citer les résines MDQ vinylées, telle que $MD^{vi}Q$, ou encore des résines $MM^{vi}Q$.

Concernant les tensioactifs (E) autre que l'hydrocolloïde protecteur (APV), ils peuvent être anioniques [sauf dans le cas où l'émulsion comprend une amine salifiée à titre de promoteur (C)], cationiques ou non ioniques, en particulier il peut s'agir d'un ou plusieurs alcools gras polyéthoxylés. De préférence, les tensioactifs (E) sont non ioniques. Le rôle du tensioactif sera notamment d'affiner la granulométrie de l'émulsion et éventuellement d'améliorer sa stabilité.

L'émulsion selon l'invention peut comporter également d'autres additifs (I) de formulation tels que : un catalyseur de condensation permet tant de favoriser la condensation des silanols du silane ou POS aminé salifié mais n'inhibant pas la catalyse au platine (par exemple des sels de titane, de zirconium, ou éventuellement certains sels d'étain), un bactéricide, un ou plusieurs pigments minéraux ou organiques, un ou plusieurs épaississants organiques (polyoxyde d'éthylène, gomme xanthane, hydroxyéthylcellulose, polymères acryliques ou cationiques ...) ou minéraux (laponite).

Avantageusement, l'émulsion selon l'invention comprend un système de maintien du pH à des valeurs alcalines par exemple comprises entre 7 et 8. Ce système de maintien du pH peut être e.g. du bicarbonate de soude.

L'agent de fixation et de maintien du pH est, de préférence, un système tampon comprenant $HCO_3^-/CO_3^{2-}$ et/ou $H_2PO_4^-/HPO_4^{2-}$. Ainsi, pour obtenir l'effet tampon souhaité, il conviendra d'introduire conformément à l'invention un sel d'$HCO_3^-$ et/ou $H_2PO_4$ comme par exemple $NaHCO_3$ et/ou $Na_2CO_3$ et/ou $NaH_2PO_4$ et/ou $Na_2HPO_4$. Il va de soi que tout autre sel à contre-anion différent (e.g. K) pourrait convenir. De manière particulièrement préférée, on met en oeuvre en pratique un système tampon constitué par du $NaHCO_3$ que l'on incorpore dans l'émulsion.

Cela permet la stabilisation de l'émulsion ou du bain d'enduction ou de foulardage réalisé par mélange des émulsions. Cette disposition est décrite plus en détail dans la demande de brevet FR-A-2 773 166 dont le contenu est inclus dans le présent exposé par référence.

Eventuellement, l'émulsion peut contenir des charges minérales de renfort ou de bourrage, qui sont choisies de préférence parmi les silices de combustion et les silices de précipitation. Elles ont une surface spécifique, mesurée selon les méthodes BET, d'au moins 50 $m^2/g$, notamment comprise entre 50 et 400 $m^2/g$, de préférence supérieure à 70 $m^2/g$, une dimension moyenne des particules primaires inférieure à 0,1 micromètre ($\mu m$) et une densité apparente inférieure à 200 g/litre.

Ces silices hydrophiles sont de préférence incorporées telles quelles dans la phase aqueuse (continue) de l'émulsion. Selon une variante, ces silices peuvent éventuellement être traitées par un ou des composés organosiliciques habituellement utilisés pour cet usage. Selon une autre variante, les silices peuvent être prédispersées dans l'huile silicone. Parmi ces composés, figurent les méthylpolysiloxanes tels que l'hexaméthyldisiloxane, l'octaméthylcyclo-tétrasilo-xane, les méthylpolysilazanes tels que l'hexaméthyldisilazane, l'hexaméthylcyclo-trisilazane, les chlorosilanes tels que le diméthyl-dichlorosilane, le triméthylchloro-silane, le méthylvinyldichlorosilane, le diméthylvinylchlorosilane, les alcoxysilanes tels que le diméthyl-diméthoxysilane, le diméthylvinyléthoxysilane, le triméthyl-méthoxysilane. Lors de ce traitement, les silices peuvent accroître leur poids de départ jusqu'à un taux de 20 %.

Il est également possible d'utiliser en sus ou à la place des charges siliceuses d'autres charges minérales telles que carbonates de calcium, quartz broyé, argiles calcinées et terres de diatomées, éventuellement sous forme de dispersion aqueuse (slurry).

En ce qui concerne les matières minérales non siliceuses, elles peuvent intervenir comme charge minérale semi-renforçante, de bourrage ou à propriétés spécifiques. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,01 et 300 $\mu m$ et une surface BET inférieure à 100 $m^2/g$.

On peut généralement utiliser de 0,5 à 60 % en poids, de préférence de 10 à 25 % en poids de charge, par rapport au poids de la phase silicone de la formule.

La composition de l'émulsion selon l'invention est, par exemple la suivante :

- ♦ 100 parties en poids d'une huile POS (A) $\alpha$, $\omega$-divinylée dont la teneur en groupements vinyles est comprise entre 2 et 100 méq/100g ;
- ♦ 0 à 150 parties en poids d'une dispersion de charge (J) renforçante, semi-renforçante et/ou de bourrage dans l'eau , ou dans une huile POS $\alpha,\omega$-divinylée (à raison de 10 à 60 % de charge dans la dispersion) ;
- ♦ 1 à 7 parties en poids d'au moins une huile POS (B1) à ≡SiH, telle que le rapport nombre de groupes Si-H / nombre de groupes Si-alcényle va de 0,4 à 10, de préférence de 0,6 à 5 ;
- ♦ 0,2 à 5 parties en poids de promoteur d'adhérence (C), pris à l'état sec ;
- ♦ un catalyseur de polyaddition (D), qui est composé d'au moins un métal appartenant au groupe du platine, à raison de 2 à 150 ppm de platine ;
- ♦ 0,5 à 10 parties en poids de tensioactif (E) ;

♦ 0 à 100 parties en poids d'une résine POS (F) ;
♦ 0 à 1 partie en poids d'un inhibiteur de réticulation (G) ;
♦ 0 à n parties en poids d'agent de fixation de pH (H), n étant tel que le pH soit maintenu entre 7 et 8 ;
♦ 0 à m parties en poids d'un additif de formulation (I) ;
♦ 0 à 150 parties en poids d'une dispersion de charge (J) renforçante, semi-renforçante et/ou de bourrage dans une huile POS $\alpha,\omega$-divinylée, à raison de 10 à 80 % de charge dans la dispersion ;
♦ 40 à 2000 parties en poids d'eau (K), de manière à ce que l'émulsion finale ou le bain (réalisé par mélange de plusieurs émulsions et d'eau), servant au traitement du tissu, ait un extrait sec compris entre 5 et 65 %.

Selon un autre de ses aspects la présente invention concerne également un procédé de préparation d'une émulsion aqueuse de POS telle que définie ci-dessus, caractérisée en ce que l'on réalise une mise en émulsion par introduction dans un même réacteur des constituants (A) à (K), à l'exception du catalyseur (D) qui est émulsifié séparément et ajouté lors de la confection du bain d'imprégnation.

De préférence, l'émulsion est produite par mélange de pré-émulsions qui sont chacune inaptes à réticuler séparément du fait qu'elles ne présentent pas toutes les espèces réactives et le catalyseur nécessaire (POS ≡SiVi + POS ≡SiH + platine) pour la polyaddition. Par exemple on peut réaliser une émulsion contenant les ≡SiVi et les ≡SiH et l'inhibiteur (partie A), et une émulsion catalysante à base de platine et d'huile ≡SiVi (partie B), qui seront associées lors de la confection du bain d'enduction.

Cela facilite grandement l'obtention d'une émulsion stable selon l'invention et qui peut être aisément préparée dans des conditions industrielles. Il est envisageable de mettre en oeuvre des ingrédients (A) et/ou (B) et/ou (C) se présentant sous forme de pré-émulsions contenant ou non les autres ingrédients (D) à (J).

Ainsi, selon une variante :

- on réalise les pré-émulsions suivantes :

  (i) une pré-émulsion non catalysante comme base du POS (A),
  (ii) une pré-émulsion non catalysante comme base du POS (B) (émulsion réticulante),
  (iii) une pré-émulsion comme base du catalyseur (D) (émulsion catalysante) constitué par exemple d'une émulsion aqueuse d'un catalyseur au platine dilué dans une huile silicone vinylée ;

- on mélange ces pré-émulsions, l'une ou l'autre des pré-émulsions (i) à (iii) pouvant renfermer, en outre, le tensioactif (E), éventuellement la résine POS (F), éventuellement l'inhibiteur de réticulation (G) et/ou éventuellement l'agent (H) de fixation du pH et/ou éventuellement l'additif de formulation (I).

De préférence, l'émulsion catalysante est ajoutée aux autres pré-émulsions silicones non catalysantes (notamment celle à base de SiH) lors de la formulation du bain, avant application sur le tissu.

Selon des modalités avantageuses de l'invention :

• lorsque l'on utilise le tensioactif (E) comme seul émulsifiant, la mise en émulsion se fait par voie directe ou par inversion de phase ;

la voie directe consistant à couler la phase silicone dans la solution aqueuse contenant le tensioactif.

Une autre modalité avantageuse de l'invention peut consister en l'introduction du promoteur d'adhérence (C), notamment le silane ou POS aminé salifié, uniquement lors de la préparation du bain d'enduction.

Une autre possibilité pourrait être de préparer des parties A et B d'émulsion ou des pré-émulsions (i), (ii), (iii) ne contenant pas de promoteur d'adhérence, de prévoir l'incorporation séparée de ce dernier lors du mélange de A et B ou de (i), (ii), (iii).

La présente invention a aussi pour objet un procédé de préparation d'un support fibreux revêtu d'au moins une couche d'élastomères obtenus par réticulation de l'émulsion aqueuse de POS telle que définie ci-dessus.

Ce procédé comprend les étapes suivantes :

- une étape de dépôt d'au moins une couche de l'émulsion telle que définie ci-dessus sur ledit support fibreux ;
- puis une étape de réticulation, de manière à obtenir un support fibreux revêtu d'une couche d'élastomère, de telle sorte que le rapport du poids de l'enduction exprimée en sec au poids du support fibreux soit inférieur à 0,2 et de préférence compris entre 0,05 et 0,11.

L'étape de dépôt est avantageusement une enduction.

L'étape d'enduction peut notamment être réalisée par racle, en particulier par racle sur cylindre, racle en l'air

et racle sur tapi s, ou par foulardage, c'est-à-dire par exprimage entre deux rouleaux, ou encore par rouleau lécheur, cadre rotatif, rouleau inverse "reverse roll", transfert, pulvérisation.

On peut enduire l'une ou les deux faces de la matière textile, l'enduction des deux faces étant alors avantageusement réalisée par foulardage après imprégnation du tissu avec l'émulsion. Après passage entre les rouleaux, le tissu est enduit uniformément d'une couche fine d'émulsion. On procède ensuite au séchage et à la réticulation, de préférence par air chaud ou infra-rouges, notamment de 30 s à 5 min, à une température de réticulation sans dépasser la température de dégradation du substrat.

Lorsque l'enduction est effectuée sur une seule face, on utilise préférablement une racle. L'ém ulsion est déposée en continu sur la face supérieure du tissu, puis passe sous la racle, avant séchage et réticulation comme ci-dessus.

De préférence, l'enduction est réalisée :

- ♦ par immersion du support fibreux dans un bain d'émulsion telle que définie supra,
- ♦ par essorage, de préférence par pression entre des rouleaux,
- ♦ puis par réticulation, de préférence sous activation thermique lorsque la réticulation s'effectue selon un mécanisme de polyaddition.

La couche d'élastomère est de préférence présente en qu antité telle que le rapport du poids de l'enduction exprimée en sec au poids du support fibreux soit inférieur à 0,2 et de préférence compris entre 0,05 et 0,11.

En cas d'émulsion à deux composants, le procédé comprend une étape préalable consistant dans le mélange des deux composants.

La présente invention vise également tout produit susceptible d'être obtenu par dépôt sur un support fibreux -de préférence en fibres de verre- à l'aide de l'émulsion telle que définie ci-dessus, puis réticulation en élastomère des POS contenus dans l'émulsion appliquée sur le support.

A titre d'exemples, on peut citer les sacs gonflables utilisés pour la protection des occupants d'un véhicule, en anglais "air bag", tresses de verre (gaines en tissu de verre de protection thermique et diélectrique pour fil électrique), bandes transporteuses, tissus coupe-feu ou isolants thermiques, compensateurs (manchons flexibles d'étanchéité pour tuyauterie), vêtements ou bien encore des matériaux souples destinés à être utilisés dans l'architecture textile intérieure ou extérieure (bâches, tentes, stands, chapiteaux...).

Les supports fibreux destinés à être enduits peuvent être par exemple des tissus, des non-tissés ou des tricots ou plus généralement tout support fibreux comprenant des fibres et/ou des fibres choisis dans le groupe de matériaux comprenant : le verre, la silice, les métaux, la céramique, le carbure de silicium, le carbone, le bore, les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques ...

A titre d'exemples préférés de supports fibreux, on peut citer les tissus de verre.

Avantageusement, ces tissus de verre enduits ont une bonne résistance à la déchirure et à l'effilochage. Ils sont par ailleurs souples et ne sont pas sujets au marquage à la pliure. De plus, leur Pouvoir Calorifique Supérieur (PCS) est inférieur ou égal à 2500 kJ/kg.

La présente invention vise par ailleurs l'utilisation d'une émulsion telle que définie supra ou obtenue à partir du procédé décrit ci-dessus pour revêtir un support fibreux à l'exception de tout textile architectural.

Par "textile architectural", on entend un tissu ou non tissé et plus généralement tout support fibreux destiné après revêtement à la confection :

- d'abris, de structures mobiles, de bâtiments textiles, de cloisons, de portes souples, de bâches, de tentes, de stands ou de chapiteaux ;
- de mobiliers, de bardages, d'écrans publicitaires, de brise-vent ou panneaux filtrants ;
- de protections solaires, de plafonds et de stores.

L'invention va être maintenant décrite plus en détail à l'aide d'exemples de réalisation non limitatifs.

<u>EXEMPLES</u>

Exemple 1 : Confection des émulsions n'appartenant pas à l'invention

1.1 - <u>Composés mis en oeuvre</u> :

- POS A-1 : huile PDMS $\alpha$, $\omega$), de viscosité dynamique ($\eta$dt) = 60 000 mPa.s à 23°C et contenant 0,073 % Vi en poids)
- POS A-2 : huile POS hydrogénée à motifs Me2SiO et MeHSiO de viscosité 25 mPa.s et contenant 0,7 % H en poids)
- Tensioactif (E) = soit le Rhodasurf ROX solution aqueuse à 85 % d'un alcool gras éthoxylé commercialisé par RHODIA, soit l'APV = solution aqueuse à 10% d'alcool polyvinylique 25/140 (viscosité en solution à 4 % : 25 / indice d'ester : 140) de marque RHODOVIOL®
- Promoteur (C) d'adhérence et tensioactif (E) = APV
- Catalyseur (D) = platine de Karstedt dilué dans une huile POS vinylée, et titrant 10 % de Pt
- Résine (F.1) = solution à 40 % de résine $MD^{vi}Q$ dans une huile PDMS $\alpha$,$\omega$) de viscosité dynamique ($\eta$dt) = 60 000 mPa.s à 23°C, la solution de résine contenant 0,7 % Vi en poids)
- (G) = ECH : Ethynylcyclohexanol.

Compositions pondérales (en g) :

| | **PARTIE (A1)** | **PARTIE (A2)** | **PARTIE (B) (émulsion catalysante)** |
|---|---|---|---|
| POS (A-1) - huile vinylée | 280 | 280 | 106 |
| (G) = ECH | 0,7 | 0,7 | 0 |
| Résine (F.1) | 280 | 280 | 0 |
| Tensioactif (E) = Rhodasurf ROX | 35 | - | - |
| (C) + (E) = PVA [Rhodoviol® : 10% APV] | - | 162 | 56 |
| POS (A-2) - huile hydrogénée | 25 | 25 | 0 |
| Catalyseur (D) à 10 % de Pt | - | - | 0,9 |
| Acide sorbique | 0,225 | 0,225 | 0 |
| Bicarbonate de soude à 100 % | - | - | 1,9 |
| Eau déminéralisée | 409 | 270 | 35 |
| Total | 1030 | 1018 | 200 |
| *Propriétés des émulsions finales* | | | |
| Granulométrie moyenne (µm) mesurée au Coulter LS130 | 0,3 | 2,9 | 2,4 |
| *Extrait sec (%) (2g 1 h à 120 °C)* | 59,6 | 59,6 | 60,9 |
| SiH/SiVi (rapport molaire) du bain obtenu par mélange de 100 parties en poids émulsion A + 10 parties en poids d'émulsion catalysante B | 2,07 | | |
| PH du bain réalisé par mélange de 100 parties en poids d'émulsion A + 10 parties émulsion catalysante B | entre 7 et 8 | | |

1.2 - Mode opératoire pour la préparation des émulsions :

PARTIE (A1) :

Dans un réacteur IKA de laboratoire, muni d'une ancre raclante et d'un socle (refroidi par circulation d'eau froide), introduction du Rhodasurf ROX , de 35 g d'eau, et de l'huile POS (A-1) dans laquelle a été dispersé préalablement l'inhibiteur ECH. Après 15 min d'agitation à 80 trs / min on obtient une émulsion huile/eau concentrée présentant l'aspect d'un gel visqueux.

On coule alors la résine (F.1) sous agitation (80 trs/min) et pendant 85 min, la température finale étant voisine de 30°C. La granulométrie moyenne de l'émulsion est alors de 0,28 μm.

On agite encore pendant 30 min, puis on coule l'huile POS (A-2) (huile polydiméthylsiloxane hydrogénée), pendant 15 min, et 80 g d'eau.

A cette étape la granulométrie moyenne de l'émulsion caractérisée au Coulter LS130 est de 0,29 μm.

Dilution de l'émulsion par addition progressive du solde d'eau déminéralisée (soit 310 g), puis de l'acide sorbique, et l'émulsion finale est conditionnée en flacon en polyéthylène.

PARTIE (A2) :

Dans un réacteur IKA de laboratoire, muni d'une ancre raclante et d'un socle (refroidi par circulation d'eau froide), introduction de la solution aqueuse à 10 % d'alcool polyvinylique (Rhodoviol 25/140) et de l'acide sorbique.

On coule la résine (E.1) sous agitation pendant 170 min, la température finale étant voisine de 22°C.

On coule ensuite l'huile POS (A-1) (huile polydiméthylsiloxane bloquée ViMe2SiO, de viscosité égale à 60 000 mPa.s et contenant 0,07 % Vi) dans laquelle a été prédispersée l'éthynylcyclohexanol (ECH), pendant 150 min, la température finale atteignant 17°C.

A cette étape la granulométrie moyenne de l'émulsion caractérisée au Coulter LS130 est de 5,9 μm.

On ajoute alors un Rotor-stator Ultra-Turrax (IKA) et cisaille l'émulsion pendant 1 h30: 20 min à 16000 tours/min puis 1 h10 à 13000 tr/min,

Tinitiale° = 22,9°C T°finale= 28,6°C.

La granulométrie moyenne baisse à 3 μm.

Coulée de l'huile POS (A-2) (huile silicone à motifs $Me2SiO_{2/2}$ et $MeHSiO_{2/2}$ de Viscosité 25 mPa.s et contenant 0,7 % H en poids) pendant 20 min, T=24,5°C.

Dilution de l'émulsion par addition progressive d'eau déminéralisée pendant 60 min, T°=27,3°C.

PARTIE B :

L'émulsion B est réalisée selon le même protocole que l'émulsion A2, en coulant l'huile POS-1 621 V60000 (dans laquelle a été prédispersé le catalyseur (D) dans la solution aqueuse à 10 % d'alcool polyvinylique. Le bicarbonate est ajouté à la fin, dans l'émulsion diluée.

PARTIES A + B :

Le mélange de 100 parties de A1 ou A2 avec 10 parties de B, plus éventuellement de l'eau de dilution pour ajuster la viscosité et la concentration du bain (en vue de régler la quantité de silicone déposée sur le tissu) est réalisé lors de la constitution du bain d'enduction, avant application sur le tissu. Le pH du bain est compris entre 7 et 8.

**Exemple 2 : Procédé d'application des émulsions de l'exemple 1**

Par foulardage (exprimage entre deux rouleaux).

Le tissu arrive verticalement entre les rouleaux où l'émulsion est déposée en continu, le tissu se trouvant imprégné sur ses deux faces en sortie des rouleaux. Ensuite le tissu passe dans un four pendant une minute.

L'installation fonctionne à 10 m/min. Les températures des fours sont réglées à 120 en entrée, puis à 160°C en sortie. La pression sur les rouleaux d'exprimage est de l'ordre de 1,5 bars.

Les tissus sont pesés avant et après enduction pour mesurer le poids déposé.

**Exemple 3 : Procédé d'application des émulsions de l'exemple 1**

Cet exemple est identique à l'exemple 2, à la différence près que la pression sur les rouleaux d'exprimage est de l'ordre de 1 bar.

Les tissus sont pesés avant et après enduction pour mesurer le poids déposé.

**Exemple 4 : Procédé d'application des émulsions de l'exemple 1**

Par foulardage (exprimage entre deux rouleaux).

Le tissu est immergé dans un bac placé en amont des rouleaux d'exprimage et arrive selon un angle de 20° entre les rouleaux dont la pression d'exprimage est de 1.5 bars, Ensuite le tissu passe dans un four pendant une minute.

L'installation fonctionne à 10 m/min. Les températures des fours sont réglées à 120 en entrée, puis à 160°C en sortie. Les tissus sont pesés avant et après enduction pour mesurer le poids déposé.

**Exemple 5 : Validation en application - propriétés obtenues avec le mélange d'émulsions A2 + B (sans additif)**

<u>5.1 Tissu de verre poids 350 g/m$^2$</u>

Ce tissu est enduit selon le procédé de l'exemple 4 par une émulsion selon l'exemple 1 (mélange d'émulsions A2 + B (sans additif).

L'extrait sec de ce bain a été ajusté à 55,7 %, puis à 48 %.

Dans ces conditions on déposé 22 g/m$^2$ exprimé en sec.

Le tissu enduit présente un bel aspect.

Le pouvoir calorifique supérieur mesuré selon NFP92-510 est de 1900 KJ/kg.

La tenue à l'effilochage est bonne, elle est matérialisée par une résistance au peignage mesurée selon DIN54301 supérieure à 50 N.

<u>5.2 Tissu de verre poids 200 g/m$^2$</u>

Ce tissu est enduit selon le procédé de l'exemple 2 par une émulsion selon l'exemple 1 (mélange d'émulsions A2 + B (sans additif).

L'extrait sec de ce bain a été ajusté à 55,7 %, puis à 42 %.

Dans ces conditions on a déposé 15 g/m$^2$ exprimé en sec.

Le tissu enduit présente un bel aspect.

Le pouvoir calorifique supérieur mesuré selon NFP92-510 est de 2150 KJ/kg.

La tenue à l'effilochage est bonne, elle est matérialisée par une résistance au peignage mesurée selon DIN54301 supérieure à 50 N.

<u>5.3 Tissu de verre poids 200 g/m$^2$</u>

Ce tissu est enduit selon le procédé de l'exemple 3 par une émulsion selon l'exemple 1 (mélange d'émulsions A2 + B (sans additif)).

L'extrait sec de ce bain a été ajusté à 55,7 %, puis à 42 %.

Dans ces conditions on a déposé 12 g/m$^2$ exprimé en sec.

Le tissu enduit présente un bel aspect en particulier sur la face supérieure ayant reçu l'émulsion.

Le pouvoir calorifique supérieur mesuré selon NFP92-510 est de 1800 KJ/kg.

La tenue à l'effilochage est bonne, elle est matérialisée par une résistance au peignage mesurée selon DIN54301 supérieure à 50 N.

**Exemple 6 : Incorporation à l'émulsion A du silane aminé salifié ou d'APV lors de la confection du bain d'enduction**

Des essais d'addition de promoteurs d'adhérence ont été réalisés pour rendre les émulsions davantage adhérentes sur la fibre de verre ou des fibres synthétiques. Les silanes hydrosolubles testés sont :

**6.1** <u>Essai comparatif</u> :

Le promoteur est le dynasylan® HS 2926 commercialisé par la société Degussa -Sivento, silane époxy, pH=3, à 60% dans l'eau

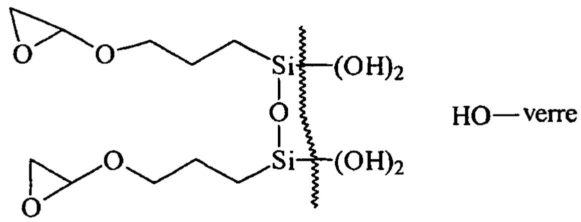

**6.2** Essai 6.2

Le dynasylan® HS 2929 commercialisé par la société Degussa -Sivento, silane aminé et acrylique condensé et salifié, pH=4, à 60% dans l'eau

**6.3** Essai 6.3

Le promoteur est le Silquest® VS142 commercialisé par la société Witco - OSI, silane aminé, pH =12, à env. 25 % dans l'eau, qui est constitué d'un oligomère du silane décrit ci-dessous, partiellement condensé via ses SiOH.

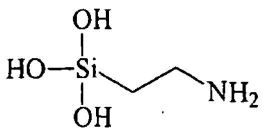

Ce silane a été utilisé après salification préalable obtenue par neutralisation de la solution aqueuse par addition d'une quantité d'acide acétique suffisante pour ramener son pH entre 6 et 7.

Ces promoteurs des essais 6.1, 6.2, 6.3 sont additionnés directement dans la partie A2 de l'émulsion de l'exemple 1, 24 H avant la réalisation du bain (mélange A2 + B) à un taux de 2% (en poids de silane sec par rapport à l'huile). Dès confection du bain des tests d'enduction de tissu par sérigraphie et de pelage sont réalisés avec le protocole décrit en annexe. Les résultats d'adhérence sur polyester et sur tissu de verre type toile, exprimés par la force de pelage (mesurée en N/(g/$m^2$), selon un test de pelage à 180° décrit ci-après) sont représentés sur les figures 1 et 2 annexées.

La **Figure 1** correspond à un support en tissu polyester.

La **Figure 2** correspond à un support en tissu de verre.

Nota : dans les 2 figures, le témoin correspond aux résultats d'adhérence obtenus lorsque le tissu est traité avec l'émulsion 1.2 de l'exemple 1, sans ajout de promoteur d'adhérence supplémentaire.

On remarque que les silanes aminés et salifiés améliorent nettement l'adhérence sur tissu de verre. Le silane aminé et salifié 6.2 améliore aussi l'adhérence sur tissu en polyester.

Le test du pelage à 180° sur support fibreux est une mesure de l'adhérence d'émulsions de PA. La procédure de ce test est la suivante:

1. Principe

Mesure de la force nécessaire pour décoller 2 bandes de supports enduits du mélange à tester et réticulé sur les supports fibreux.

2. Réactifs

Utilisation de Bleu de Méthylène pour faciliter le repérage de la superposition des deux lamelles de tissu enduites (non indispensable à la mesure).

3. Appareillage

- 1 presse chauffante : fixer la température des plateaux à 120°C.
- 2 étuves : une à 80°C et une à 160°C.
- installation pour application par mode sérigraphique (utilisation d'une toile de mailles de diamètre ~ 200 μm).
- 1 Balance.
- 1 Dynamomètre LHOMARGY® DY 30.

4. Mode opératoire

a- Préparation des éprouvettes

* Tissu support utilisé :

Découpe de bandes de ~12 sur 17 cm dans le support fibreux. Pour faciliter cette découpe et éviter l'effilochage, on enduit les contours tracés sur le tissu, d'un élastomère silicone réticulant rapidement à froid (CAF). Donc à l'aide d'un pistolet on dépose des petites quantités de CAF que l'on étale à l'aide d'une spatule le long des contours. Une fois le CAF sec, le découpage sera plus facile.

* Préparation du mélange :

10 g de partie B pour 100 g de partie A. Il faut ~20 g de mélange pour préparer 3 essais. On ajoute 1 goutte de bleu de méthylène pour faciliter la superposition des deux faces enduites.

b- Application

Par mode sérigraphique, on dépose 2 bandes de 10 cm sur 5 du mélange, parallèlement et à une distance de ~ 2 cm. Le morceau de support est pesé avant et après enduction pour connaître la quantité déposée.

* Séchage et réticulation sous presse:

- 5 min à 80°C,
- superposition des 2 faces enduites l'une sur l'autre,
- 5 min sous presse à 120°C (déposer entre 2 feuilles de papier), à ~2 tonnes,
- 5 min à 160°C,

laisser reposer à T° ambiante pendant ~ ½ journée.

**6.4** Essais d'application avec mélanges partie A1 + B, A1 + B + VS142 salifié, A1 + B + APV :

Ces imprégnations sont réalisées sur support tissu de verre (200 g/m2) par foulardage selon l'exemple 3. Les échantillons sont passés en étuve à 150°C pendant 2 min. Les poids déposés sont comparables et représentatifs.
Les tests de résistance au peignage sont réalisés afin de déterminer l'aptitude des échantillons à résister à l'effilochage.

| Partie | Poids déposé | Résistance au peignage (DIN 54301) |
|---|---|---|
| A1 + B | 18-20 | 11 |
| A1 + B + VS 142 salifié | 18 | 44 |
| A1 + B + 1.8 % APV | 19-20 | 24 |
| A1 + B + 3.6 % APV | 17 | 14 |
| A1 + B + 5.4 % APV | 16 - 19 | 16 |

Il a pu être observé que la meilleure résistance à l'effilochage matérialisée par le test de peignage est obtenue grâce à la composition A1 + B + VS 142 (présence du silane aminé salifié).

## Revendications

1. Émulsion aqueuse de polyorganosiloxane (POS) réticulable en élastomère par des réactions de polyaddition, pour l'imprégnation de supports fibreux tissés ou non, et comprenant:

   (A) au moins un POS présentant par molécule au moins deux groupements fonctionnels insaturés de type alcényle en $C_2$-$C_6$, liés au silicium,
   (B) au moins un POS présentant par molécule au moins trois atomes d'hydrogène liés au silicium,
   (C) au moins un promoteur d'adhérence spécial,
   (D) au moins un catalyseur,
   (E) au moins un tensioactif,
   (F) éventuellement au moins une résine POS comportant au moins deux groupements alcényles,
   (G) éventuellement au moins un inhibiteur de réticulation,
   (H) éventuellement au moins un agent de fixation du pH,
   (I) éventuellement au moins un additif de formulation,
   (J) éventuellement une charge,
   (K) et de l'eau,

   **caractérisée en ce que** :

   • le promoteur d'adhérence (C) est choisi dans le groupe de composés constitué par les silanes et/ou les POS, lesdits silanes ou POS étant porteurs par molécule d'au moins un groupement hydroxyle et d'au moins une fonction aminée et salifiée, et leurs mélanges,
   • le pourcentage en poids du promoteur d'adhérence (C) par rapport à la phase silicone est tel que :
   $0,005 \leq (C) \leq 10$
   de préférence $0,03 \leq (C) < 5$
   et plus préférentiellement encore $0,05 \leq (C) \leq 4,0$

2. Émulsion selon la revendication 1, **caractérisée en ce qu'**elle est exempte :

   * de copolymère(s) polydiorganosiloxane vinylé sensiblement linéaire, de type statistique, bloqué à chacune des extrémités de sa chaîne polymère par des groupements vinyldiorganosiloxy ou triorganosiloxy et contenant au moins trois groupements SiVi par molécule,
   * et/ou exempte de cyclotrisiloxane(s) vinylé de formule $[R(CH_2{=}{=}CH)SiO]_3$ dans laquelle R est un radical alkyle en C1-C4, un radical phényle ou un radical 3,3,3-trifluoropropyle, ce cyclotrisiloxane vinylé étant présent en quantité telle que 0,5 à 60 %, de préférence 1,5 à 20 % du nombre de groupements vinyles de l'émulsion seraient constitués par les vinyles de ce cyclotrisiloxane vinylé,
   * et/ou exempte de lauryl sulfate de sodium.

3. Émulsion selon la revendication 1, **caractérisée en ce que** le rapport quantité pondérale de promoteur d'adhérence (C) / surface développée par le support, se situe dans l'intervalle allant de 0,1 à 10 $mg/m^2$, de préférence de 0,2 à 5 $mg/m^2$.

4. Émulsion selon l'une quelconque des revendications 1 à 3, **caractérisée en ce que** le tensioactif (E) est au moins en partie constitué par de l'APV.

5. Émulsion selon l'une quelconque des revendications 1 à 4, **caractérisée en ce que** le POS aminé et salifié constituant le promoteur (C) est formé de plusieurs unités récurrentes de formule moyenne (I) suivante:

$$(R^1)_x(R^2)_y(OH)_z\,Si\,O_{\frac{4-(x+y+z)}{2}} \qquad \textbf{(I)}$$

   dans laquelle :

   ■ $R^1$ représente un groupement monovalent exempt d'azote, de nature identique ou différente d'une unité

récurrente à l'autre, et correspondant à un alkyle en $C_1$-$C_6$, un aryle, un alcényle en $C_2$-$C_8$, ou un acrylate, chacun de ces groupements étant éventuellement substitué,

■ $R^2$ étant de nature identique ou différente d'une unité récurrente à l'autre et répondant à la formule suivante :

$$-R^4-N^{(+)}R^5R^8, X^{(-)}$$

* $R^4$ étant un radical hydrocarboné en $C_1$-$C_{10}$, éventuellement substitué,
* les groupements $R^5$, $R^6$ sont identiques ou différents et représentent l'hydrogène ou un radical hydrocarboné en $C_1$-$C_{10}$, éventuellement substitué, ou $-R^4-NH_3^{(+)}$ ,$X^{(-)}$,
* ou bien encore les groupements $R^5$ et $R^6$ sont différents de l'hydrogène et forment ensemble un cycle à 5 - 7 chaînons renfermant au moins un hétéroatome, de préférence l'azote ou l'oxygène,
* et X représentant un contre-anion choisi parmi les carboxylates, les halogénures et ;

■ x, y et z sont des nombres entiers ou décimaux positifs inférieurs à 4 ;
■ et x+y+z <4.

**6.** Émulsion selon la revendication précédente, **caractérisée en ce que** le POS aminé et salifié est une résine présentant une fonctionnalité moyenne en silicium supérieure à 2, correspondant à x + y < 2 :

• x étant de préférence < 2 et plus préférentiellement encore $0,1 \leq x \leq 1$ ;
• y étant de préférence < 1,2 et plus préférentiellement encore 0,1 $1 \leq x \leq 1,1$.

**7.** Émulsion selon l'une quelconque des revendications 1 à 6, **caractérisée en ce qu'**elle comprend :

♦ 100 parties en poids d'une huile POS (A) $\alpha,\omega$-divinylée dont la teneur en groupements vinyles est comprise entre 2 et 100 méq/100 g ;
♦ 0 à 150 parties en poids d'une dispersion de charge (J) renforçante, semi-renforçante et/ou de bourrage dispersée dans l'eau ou dans une huile POS $\alpha,\omega$-divinylée (à raison de 10 à 60 % de charge dans la dispersion) ;
♦ 1 à 7 parties en poids d'au moins une huile POS (B1) à SiH, telle que le rapport nombre de groupes Si-H / nombre de groupes Si-alcényle va de 0,4 à 10, de préférence de 0,6 à 5 ;
♦ 0,2 à 5 parties en poids de promoteur d'adhérence (C), pris à l'état sec ;
♦ un catalyseur de polyaddition (D), qui est composé d'au moins un métal appartenant au groupe du platine, à raison de 2 à 150 ppm de platine ;
♦ 0,5 à 10 parties en poids de tensioactif (E) ;
♦ 0 à 100 parties en poids d'une résine POS (F) ;
♦ 0 à 1 partie en poids d'un inhibiteur de réticulation (G) ;
♦ 0 à n parties en poids d'agent de fixation de pH (H), n étant tel que le pH soit maintenu entre 7 et 8 ;
♦ 0 à m parties en poids d'un additif de formulation (I) ;
♦ 0 à 150 parties en poids d'une dispersion de charge (J) renforçante, semi-renforçante et/ou de bourrage dans une huile POS $\alpha,\omega$-divinylée, à raison de 10 à 80 % de charge dans la dispersion ;
♦ 40 à 2000 parties en poids d'eau (K), de manière à ce que l'émulsion finale ou le bain (réalisé par mélange de plusieurs émulsions et d'eau), servant au traitement du tissu, ait un extrait sec compris entre 5 et 65 %.

**8.** Procédé de préparation d'une émulsion aqueuse de POS selon l'une quelconque des revendications 1 à 7, **caractérisée en ce que** l'on réalise une mise en émulsion par introduction dans un même réacteur des constituants (A) à (K), à l'exception du catalyseur (D) qui est émulsifié séparément et ajouté lors de la confection du bain d'imprégnation.

**9.** Procédé selon la revendication 8, **caractérisé en ce que** :

• on réalise les pré-émulsions suivantes :

(i) une pré-émulsion comme base du POS (A),
(ii) une pré-émulsion comme base du POS (B) (émulsion réticulante),
(iii) une pré-émulsion comme base du catalyseur (D) (émulsion catalysante) constitué par exemple d'une émulsion aqueuse d'un catalyseur au platine type g prédilué dans une huile silicone vinylée ;

• on mélange ces pré-émulsions, l'une ou l'autre des pré-émulsions (i) à (iii) pouvant renfermer, en outre, le tensioactif (E), éventuellement la résine POS (F), éventuellement l'inhibiteur de réticulation (G) et/ou éventuellement l'agent (H) de fixation du pH et/ou éventuellement l'additif de formulation (I) ; de préférence l'émulsion catalysante est ajoutée lors de la formulation du bain d'enduction.

**10.** Procédé selon l'une des revendications précédentes, **caractérisé en ce que** le promoteur d'adhérence (C) est introduit uniquement lors de la préparation du bain d'enduction.

**11.** Utilisation d'une émulsion selon l'une des revendications 1 à 7 ou obtenue à partir du procédé selon l'une des revendications 8 à 10, pour revêtir un support fibreux à l'exception de tout textile architectural.

## Claims

**1.** Aqueous polyorganosiloxane (POS) emulsion, crosslinkable into an elastomer by means of polyaddition reactions, for impregnating woven or non-woven fibrous substrates, said emulsion comprising:

(A) at least one POS having at least two unsaturated functional groups of the $C_2$-$C_6$ alkenyl type bonded to the silicon in each molecule,
(B) at least one POS having at least three hydrogen atoms bonded to the silicon in each molecule,
(C) at least one special adhesion promoter,
(D) at least one catalyst,
(E) at least one surfactant,
(F) optionally at least one POS resin containing at least two alkenyl groups,
(G) optionally at least one crosslinking inhibitor,
(H) optionally at least one pH fixing agent,
(I) optionally at least one formulating additive,
(J) optionally a filler,
(K) and water,

**characterized in that**:

• the adhesion promoter (C) is selected from the group of compounds consisting of silanes and/or POS, said silanrs or POS carrying at least one hydroxyl group and at least one salified amino group per molecule, and mixtures thereof,
• the percentage by weight of the adhesion promoter (C), based on the silicone phase, is such that:
$0.005 \leq (C) \leq 10$
preferably $0.03 \leq (C) < 5$
and particularly preferably $0.05 \leq (C) \leq 4.0$.

**2.** Emulsion according to claim 1, **characterized in that** it is devoid of:

* substantially linear, vinylated polydiorganosiloxane copolymer(s) of the random type, blocked at each end of its polymer chain by vinyldiorganosiloxy or triorganosiloxy groups and containing at least three SiVi groups per molecule,
* and/or vinylated cyclotrisiloxane(s) of the formula $[R(CH_2{=}CH)SiO]_3$, in which R is a $C_1$-$C_4$ alkyl radical, a phenyl radical or a 3,3,3-trifluoropropyl radical, this vinylated cyclotrisiloxane being present in an amount such that 0.5 to 60% and preferably 1.5 to 20% of the number of vinyl groups in the emulsion consist of the vinyls of this vinylated cyclotrisiloxane,
* and/or exempted of sodium laurylsulfate.

**3.** Emulsion according to claim 1, **characterized in that** the ratio of the amount by weight of adhesion promoter (C) to the surface area developed by the substrate ranges from 0.1 to 10 $mg/m^2$ and preferably from 0.2 to 5 $mg/m^2$.

**4.** Emulsion according to any one of claims 1 to 3, **characterized in that** the surfactant (E) consists at least in part of PVA.

**5.** Emulsion according to any one of claims 1 to 4, **characterized in that** the salified amino-POS constituting the promoter (C) is formed of several repeat units of average formula (I) below:

$$(R^1)_x(R^2)_y(OH)_z\ Si\ O_{\frac{4-(x+y+z)}{2}}$$

**(I)**

in which:

- $R^1$ is a monovalent group devoid of nitrogen whose nature is identical or different from one repeat unit to the next and which is a $C_1$-$C_6$ alkyl, an aryl, a $C_2$-$C_8$ alkenyl or an acrylate, each of these groups optionally being substituted;
- $R^2$ is of an identical or different nature from one repeat unit to the next and has the following formula:

$$-R^4-N^{(+)}R^5R^6\ X^{(-)}$$

  * $R^4$ being an optionally substituted $C_1$-$C_{10}$ hydrocarbon radical,
  * the groups $R^5$ and $R^6$ being identical or different and representing hydrogen, an optionally substituted $C_1$-$C_{10}$ hydrocarbon radical or $-R^4-NH_3^{(+)}$, $X^{(-)}$,
  * or the groups $R^5$ and $R^6$ being different from hydrogen and together forming a 5-to 7-membered ring containing at least one heteroatom, preferably nitrogen or oxygen,
  * and X being a counteranion selected from carboxylates and halides;

- x, y and z are positive integers or decimal numbers below 4;
- and $x + y + z < 4$.

**6.** Emulsion according to the preceding claim, **characterized in that** the salified amino-POS is a resin having a mean silicon functionality greater than 2, corresponding to $x + y < 2$:

- x preferably being <2 and, particularly preferably, $0.1 \leq x \leq 1$;
- y preferably being <1.2 and, particularly preferably, $0.1 \leq y \leq 1.1$.

**7.** Emulsion according to any one of claims 1 to 6, **characterized in that** it comprises:

- 100 parts by weight of an $\alpha,\omega$-divinylated POS oil (A) with a vinyl group content of between 2 and 100 meq/100 g;
- 0 to 150 parts by weight of a dispersion of a reinforcing, semireinforcing and/or bulking filler (J) in water or in an $\alpha,\omega$-divinylated POS oil (in an amount of 10 to 60% of filler in the dispersion);
- 1 to 7 parts by weight of at least one POS oil (B1) containing a SiH such that the ratio of the number of Si-H groups to the number of Si-alkenyl groups ranges from 0.4 to 10 and preferably from 0.6 to 5;
- 0.2 to 5 parts by weight of an adhesion promoter (C), taken in the dry state;
- a polyaddition catalyst (D) composed of at least one metal belonging to the platinum group, in an amount of 2 to 150 ppm of platinum;
- 0.5 to 10 parts by weight of a surfactant (E);
- 0 to 100 parts by weight of a POS resin (F);
- 0 to 1 part by weight of a crosslinking inhibitor (G);
- 0 to n parts by weight of a pH fixing agent (H), n being such that the pH is maintained between 7 and 8;
- 0 to m parts by weight of a formulating additive (I);
- 0 to 150 parts by weight of a dispersion of a reinforcing, semireinforcing and/or bulking filler (J) in an $\alpha,\omega$-divinylated POS oil, in an amount of 10 to 80% of filler in the dispersion;
- 40 to 2000 parts by weight of water (K) so that the final emulsion or the bath (produced by mixing several emulsions with water) used to treat the fabric has a dry extract of between 5 and 65%.

**8.** Process for the preparation of an aqueous POS emulsion according to any one of claims 1 to 7, **characterized in that** an emulsion is formed by introducing the constituents (A) to (K) into the same reactor, except for the catalyst (D), which is emulsified separately and added when the impregnating bath is made up.

**9.** Process according to claim 8, **characterized in that**:

• the following pre-emulsions are produced:

(i) a pre-emulsion as the basis of the POS (A),
(ii) a pre-emulsion as the basis of the POS (B) (crosslinking emulsion),
(iii) a pre-emulsion as the basis of the catalyst (D) (catalyzing emulsion), consisting for example of an aqueous emulsion of a type g platinum catalyst prediluted in a vinylated silicone oil;

• these pre-emulsions are mixed, it being possible for one or other of the pre-emulsions (i) to (iii) also to contain the surfactant (E), optionally the POS resin (F), optionally the crosslinking inhibitor (G) and/or optionally the pH fixing agent (H) and/or optionally the formulating additive (I), the catalyzing emulsion preferably being added when the coating bath is formulated.

**10.** Process according to one of the preceding claims, **characterized in that** the adhesion promoter (C) is introduced only when the coating bath is prepared.

**11.** Use of an emulsion according to one of claims 1 to 7, or obtained by the process according to one of claims 8 to 10, for coating a fibrous substrate, except for any architectural textile.

## Patentansprüche

**1.** Wässerige Polyorganosiloxanemulsion (POS), mittels Polyadditionsreaktionen in ein Elastomer vernetzbar, zum Imprägnieren von gewebten Fasern- oder Vliesstoffträgern, umfassend:

(A) wenigstens ein POS, das pro Molekül wenigstens zwei ungesättigte funktionelle Gruppen vom Alken-$C_2$-$C_6$-Typ, gebunden an Silizium, aufweist,
(B) wenigstens ein POS, das pro Molekül wenigstens drei Wasserstoffatome, gebunden an Silizium, aufweist,
(C) wenigstens einen speziellen Haftverbesserer,
(D) wenigstens einen Katalysator,
(E) wenigstens ein Tensid,
(F) gegebenenfalls wenigstens ein POS-Harz, bestehend aus wenigstens zwei Alkengruppen,
(G) gegebenenfalls wenigstens ein Vernetzungsinhibierungsmittel,
(H) gegebenenfalls wenigstens einen pH-Wert-Regulierer,
(I) gegebenenfalls wenigstens ein Formulierungsadditiv,
(J) gegebenenfalls einen Füllstoff,
(K) und Wasser,

**dadurch gekennzeichnet, dass**

• der Haftverbesserer (C) ausgewählt ist aus der Gruppe von Verwindungen, die besteht aus Silanen und/oder POS, wobei die genannten Silane oder die genannten POS Träger von wenigstens einer Hydroxylgruppe pro Molekül und wenigstens einer versalzten Aminfunktion pro Molekül und deren Mischungen davon sind,
• die Gewichtsprozent des Haftverbesserers (C) im Verhältnis zu der Silikonphase wie folgt sind:
$0,005 \leq (C) \leq 10$
vorzugsweise $0,03 \leq (C) < 5$
und ganz besonders bevorzugt $0,05 \leq (C) \leq 4,0$.

**2.** Emulsion nach Anspruch 1,
**dadurch gekennzeichnet, dass** sie ausschließt:

* eindeutig lineares Vinylpolydiorganosiloxancopolymer /eindeutig lineare Vinylpolydiorganosiloxancopolymere vom statistischen Typ, an jedem Ende deren Polymerkette durch Vinyldiorganosiloxy- oder Triorganosiloxygruppen blockiert und enthaltend wenigstens drei Gruppen SiVi pro Molekül,
* und/oder ausschließend Vinylcyclotrisiloxan(e) mit der Formel $[R(CH_2{=}CH)SiO]_3$, worin R ein $C_1$-$C_4$-Alkylrest, ein Phenylrest oder ein 3,3,3-Trifluorpropylrest ist, wobei das Vinylcyclotrisiloxan in einer Menge von 0,5 bis 60 %, vorzugsweise 1,5 bis 20 % der Anzahl an Vinylgruppen der Emulsion, die besteht aus Vinylenen von diesem Vinylcyclotrisiloxan, vorliegt,
* und/oder ausschließend Natriumlaurylsulfat.

**3.** Emulsion nach Anspruch 1, **dadurch gekennzeichnet, dass** das Gewichtsmengenverhältnis Haftverbesserer (C) / entwickelte Oberfläche auf dem Träger im Bereich von 0,1 bis 10 mg/m$^2$, vorzugsweise von 0,2 bis 5 mg/m$^2$, liegt.

**4.** Emulsion nach einem der Ansprüche 1 bis 3, **dadurch gekennzeichnet, dass** das Tensid (E) wenigstens teilweise aus APV zusammengesetzt ist.

**5.** Emulsion nach einem der Ansprüche 1 bis 4, **dadurch gekennzeichnet, dass** das aminierte und versalzte POS, das den Haftverbesserer (C) bildet, aus zahlreichen, sich wiederholenden Einheiten der nachfolgenden durchschnittlichen Formel (II) gebildet ist:

$$(R^1)_x(R^2)_y(OH)_z\,Si\,O_{\frac{4-(x+y+z)}{2}}$$

(II)

worin:

• $R^1$ eine monovalente Gruppe mit Ausnahme von Stickstoff darstellt, identisch oder verschieden von einer sich wiederholenden Einheit an die andere und einem $C_1$-$C_6$-Alkyl, einem Aryl, einem $C_2$-$C_8$-Alken oder einem Acrylat entspricht, wobei jede dieser Gruppen gegebenenfalls substituiert ist,
• $R^2$ identisch oder verschieden von einer sich wiederholenden Einheit an die andere ist und für die nachfolgende Formel steht:

$$-R^4-N^{(+)}R^5R^8,\ X^{(-)}$$

* $R^4$ ein $C_1$-$C_{10}$-Kohlenwasserstoffrest ist, gegebenenfalls substituiert,
* die Gruppen $R^5$, $R^6$ identisch oder verschieden sind und Wasserstoff oder ein $C_1$-$C_{10}$-Kohlenwasserstoffrest, gegebenenfalls substituiert, oder $-R^4-NH_3^{(+)},X^{(-)}$ darstellen,
* sich ansonsten die Gruppen $R^5$ und $R^6$ von Wasserstoff unterscheiden und zusammen einen Ring mit 5-7 Ringmitgliedern bilden, mit wenigstens einem Heteroatom, vorzugsweise Stickstoff oder Sauerstoff, geschlossen,
* und X ein Gegenanion darstellt, ausgewählt aus Carboxylaten, Halogeniden, und
* x, y, und z ganze Zahlen darstellen oder positive Dezimale unter 4;
* und $x + y + z < 4$ ist.

**6.** Emulsion nach dem vorhergehenden Anspruch, **dadurch gekennzeichnet, dass** das aminierte und versalzte POS ein Harz ist, das eine durchschnittliche Si-Funktionalität höher als 2 darstellt, entsprechend $x + y < 2$:

• x vorzugsweise < 2 ist und stärker bevorzugt $0,1 \leq x \leq 1$;
• y vorzugsweise < 1,2 ist und stärker bevorzugt $0,1 \leq x \leq 1,1$.

**7.** Emulsion nach einem der vorhergehenden Ansprüche 1 bis 6, **dadurch gekennzeichnet, dass** sie umfasst:

• 100 Gewichtsteile eines $\alpha,\omega$-Divinyl-POS-Öls (A), wobei der Gehalt an Vinylgruppen zwischen 2 und 100 meq/100g umfasst,
• 0 bis 150 Gewichtsteile einer Dispersion eines verstärkenden Füllstoffs (J), semi-verstärkend und/oder einen Füllstoff, dispergiert in Wasser oder in einem $\alpha,\omega$-Divinyl-POS-Öl (bezogen auf 10 bis 60 % Füllstoff in der Dispersion);
• 1 bis 7 Gewichtsteile von wenigstens einem SiH-POS-Öl (B1), derart, dass das Verhältnis Anzahl der Si-H-Gruppen / Anzahl der Si-Alken-Gruppen von 0,4 bis 10 beträgt, vorzugsweise 0,6 bis 5;
• 0,2 bis 5 Gewichtsteile Haftverbesserer (C), vorliegend in einem trockenen Zustand,
• einen Polyadditionskatalysor (D), der aus wenigstens einem Metall, das zu der Gruppe der Platinmetalle gehört, zu 2 bis 150 ppm als Platin, besteht,
• 0,5 bis 10 Gewichtsteile Tensid (E);

• 0 bis 100 Gewichtsteile eines POS-Harzes (F);
• 0 bis 1 Gewichtsteile eines Vernetzungsinhibierungsmittels (G);
• 0 bis n Gewichtsteile eines pH-Wert-Regulierers (H), wobei n derart ausgewählt ist, dass der pH-Wert zwischen 7 und 8 aufrechterhalten wird,
• 0 bis m Gewichtsteile eines Formulierungsadditivs (I);
• 0 bis 150 Gewichtsteile einer Dispersion eines verstärkenden Füllstoffs (J), semi-verstärkend und /oder eines Füllstoffs in einem $\alpha,\omega$-Divinyl-POS-Öl (A), bezogen auf 10 bis 80 % Füllstoff in der Dispersion;
• 40 bis 2000 Gewichtsteile Wasser (K), dergestalt, dass die endgültige Emulsion oder das Bad (realisiert durch Mischen von mehreren Emulsionen mit Wasser), was zur Behandlung von Gewebe dient, einen Trockenextrakt zwischen 5 und 65 % aufweist.

**8.** Verfahren zur Herstellung einer wässerigen POS-Emulsion nach einem der Ansprüche 1 bis 7, **dadurch gekennzeichnet, dass** man eine Mischung einer Emulsion durch Einführen von Bestandteilen (A) bis (K) in einen gleichen Reaktor, mit Ausnahme des Katalysators (D), der getrennt emulgiert wird, und bei der Herstellung des Imprägnierungsbades zugegeben wird, durchführt.

**9.** Herstellungsverfahren nach Anspruch 8, **dadurch gekennzeichnet, dass**

• die folgenden Prä-Emulsionen hergestellt werden,

(i) eine Prä-Emulsion als Basis für POS (A),
(ii) eine Prä-Emulsion als Basis für POS (B) (Vernetzungsemulsion)
(iii)eine Prä-Emulsion als Basis des Katalysators (D) (Katalysatoremulsion), bestehend beispielsweise aus einer wässerigen Emulsion eines Katalysators vom Platintyp g, vorverdünnt in einem Vinylsilikonöl;

• diese Präemulsionen vermischt werden, wobei die eine oder die andere Präemulsion (i) bis (iii) unter anderem das Tensid (E), gegebenenfalls das Harz POS (F), gegebenenfalls das Vernetzungsinhibierungsmittel (G) und/oder gegebenenfalls den pH-Wert-Regulierer (H) und/oder gegebenenfalls das Formulierungsadditiv (I) enthalten kann; wobei die Katalysatoremulsion vorzugsweise vor der Formulierung des Beschichtungsbads zugegeben wird.

**10.** Verfahren nach einem der vorhergehenden Ansprüche, **dadurch gekennzeichnet, dass** der Haftverbesserer (C) alleine bei der Herstellung des Beschichtungsbads eingeführt wird.

**11.** Verwendung einer Emulsion nach einem der Ansprüche 1 bis 7 oder erhalten von einem Verfahren nach einem der Ansprüche 8 bis 10 zum Beschichten eines Faserträgers mit Ausnahme aller Bau-Faserstoffe.

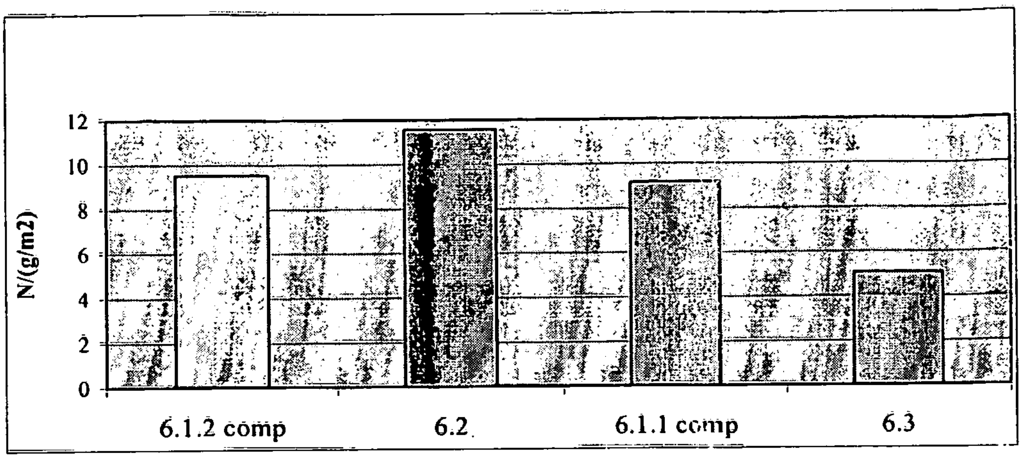
12
10
8
6
4
2
0
N/(g/m2)
6.1.2 comp
6.2
6.1.1 comp
6.3

FIG. 1

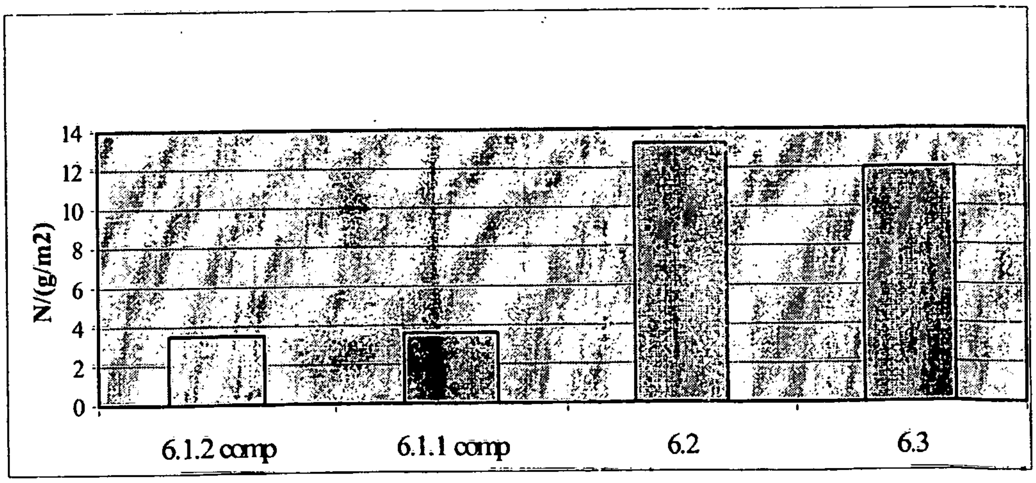
14
12
10
8
6
4
2
0
N/(g/m2)
6.1.2 comp
6.1.1 comp
6.2
6.3

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0535649 A
- EP O552983 A
- EP 0758666 B
- EP 1010721 A
- FR 2738830 A
- FR 2753708 B
- EP 0675128 A
- US 3220972 A
- US 3284406 A
- US 3436366 A
- US 3697473 A
- US 4340709 A
- FR 2773166 A

### Littérature non-brevet citée dans la description

- **WALTER NOLL.** Chemistry and Technology of Silicones. Academic Press, 1968, 386-409